# EUROPÄISCHE PATENTSCHRIFT

(11) **EP 1 790 259 B1**
(45) Veröffentlichungstag und Bekanntmachung des Hinweises auf die Patenterteilung: **02.12.2009**
(21) Anmeldenummer: 06124659.1
(22) Anmeldetag: 23.11.2006
(51) Int. Cl.: A47J 31/40

(54) **Brüheinheit für eine Kaffeemaschine sowie Kaffeemaschine**
Brewing unit for a coffee machine and coffee machine
Système d'infusion pour machine à café et machine à café

(30) Priorität: 29.11.2005 DE 202005018607 U
(43) Veröffentlichungstag der Anmeldung: 30.05.2007
(73) Patentinhaber: WIK Far East Ltd., North Point, Hong Kong (CN)
(72) Erfinder: Steckhan, Markus, 45481 Mülheim (DE); Becker, Dietmar, 42477 Radevormwald (DE)
(74) Vertreter: Haverkamp, Jens

(56) Entgegenhaltungen:
- EP-A1- 0 608 805
- EP-A1- 1 260 166
- EP-A1- 1 552 777
- GB-A- 2 162 419

## Beschreibung

Die Erfindung betrifft eine Brüheinheit für eine Kaffeemaschine umfassend einen Brühzylinder und einen Kolben, wobei der Brühzylinder und der Kolben in axialer Richtung relativ zueinander bewegbar sind, gemäß den Merkmalen des Oberbegriffs des Anspruchs 1.

Bei vollautomatischen Kaffeemaschinen erfolgt die Bereitung eines Kaffees portionsweise. Benötigt wird hierzu eine Brüheinheit, in der das gemahlene Kaffeepulver komprimiert und anschließend aufgebrüht wird. Eine solche Brüheinheit verfügt über eine Brühkammer, die durch einen Brühzylinder gebildet ist, der an seinen beiden offenen Enden durch jeweils einen Kolben abgedichtet ist. Zumindest eines der beiden Kolben und der Brühzylinder sind relativ zueinander bewegbar, wobei die Bewegbarkeit dieser Elemente zueinander dazu dient, das in die Brühkammer über einen Schacht eingebrachte Kaffeepulver zwischen den beiden Kolben zu komprimieren und anschließend das ausgelaugte Kaffeepulver aus der Brühkammer auszustoßen. Des Weiteren dient einer der beiden Kolben zum Zuführen des für den Brühvorgang benötigten heißen Wassers, während an den anderen Kolben eine Auslaufleitung angeschlossen ist. Die Auslaufleitung ist ihrerseits an einen Kaffeeauslauf angeschlossen, um den gebrühten Kaffee in ein Trinkgefäß, beispielsweise eine Tasse einfüllen zu können. Es sind unterschiedliche Verfahren bekannt geworden, die für einen Brühzyklus notwendige Bewegbarkeit der Einzeielemente einer Brüheinheit zueinander zu konzipieren. Beispielsweise ist in EP 0 659 377 A1 ein Antriebssystem beschrieben, bei dem die Brühkammer gegenüber den beiden Kolben bewegt wird, wobei zum Herbeiführen der gewünschten Kaffeepulverkomprimierung der eine Kolben von der Brühkammer mitbewegt wird, während der andere Kolben als Widerlager dient. Bei der in diesem Dokument beschriebenen Brüheinheit sind somit nur zwei Elemente derselben gegeneinander bewegbar, nämlich der Brühzylinder und einer der beiden Kolben. Des Weiteren sind Brüheinheiten bekannt geworden, bei denen beide Kolben und der Brühzylinder relativ zueinander bewegbar sind und im Laufe eines Brühzyklusses miteinander oder auch gegeneinander bewegt werden.

Allen vorbekannten Brüheinheiten ist gemein, dass die Kolben jeweils einen umlaufenden Dichtring zur Abdichtung des Kolbens gegenüber der Innenwand des Brühzylinders tragen. Die Vorspannung, mit der ein solcher Dichtring an der Innenwand des Brühzylinders anliegt, ist ausgelegt, damit auch bei höheren, in der Brühkammer auftretenden Drücken, wie dieses beim Brühen eines Espressos der Fall ist, die notwendige Dichtigkeit der Brühkammer gewährleistet ist. Dieses hat zur Folge, dass bei Brüheinheiten, in deren Brühkammern Kaffee unter einem höheren Druck bereitet werden soll, die an der Innenwand des Brühzylinders anliegende Kolbendichtung mit einer entsprechend hohen Vorspannung anliegen muss. Bei höherer Vorspannung erhöht sich jedoch naturgemäß der Reibungswiderstand bei einer Bewegung des Kolbens gegenüber dem Brühzylinder. Folglich muss bei einem Einsatz derartiger Dichtringe der motorische Antrieb der beweglichen Elemente der Brüheinheit entsprechend stark ausgelegt sein.

Damit gemahlenes Kaffeepulver in die durch einen Abschnitt des Brühzylinders und die beiden Kolben gebildete Brühkammer eingebracht werden kann, verfügt der Brühzylinder über einen Einfüllschacht oder eine Einfüllöffnung. Gebrüht wird der Kaffee in einem von der Einfüllöffnung beabstandeten Abschnitt des Brühzylinders, welcher Abschnitt in der Brühstellung der Brüheinheit durch die beiden Kolben begrenzt ist. Um das Kaffeepulver in diesen Abschnitt des Brühzylinders zu bringen wird zumindest einer der beiden Kolben gegenüber dem Brühzylinder bewegt. Bei dieser Bewegung wird der Dichtring des Kolbens auch an der Einfüllöffnung vorbeigeführt mit der Folge, dass der sich über die Öffnung erstreckende Abschnitt des Dichtringes in dieser aufgrund seiner Materialelastizität entspannt und bei Erreichen des Randes der Einfüllöffnung wiederum durch die Innenwand des Brühzylinders komprimiert wird. Der Dichtring ist daher an dieser Stelle einem Verschleiß ausgesetzt. Um einem solchen Verschleiß entgegenzuwirken, ist in EP 0 484 277 B1 vorgeschlagen worden, den gegenüber dem Brühzylinder bewegten Kolben in einer Hülse anzuordnen, die gemeinsam mit dem Kolben an der Einfüllöffnung vorbeitransportiert wird. Erst anschließend wird der Kolben aus der Hülse zum Komprimieren des Kaffeepulvers und zum Durchführen des Brühvorganges herausgefahren. Zwar ist durch diese Maßnahme ein einseitiger Verschleiß des Dichtringes beim Vorbeiführen an der Einfüllöffnung entgegengewirkt, jedoch muss der Kolben mit dem Dichtring aus der Hülse ein- und ausgefahren werden, so dass der Dichtring bei diesem Vorgang beim Ein- und Ausfahren aus der Hülse bezogen auf seinen Umfang gleichmäßig einem Verschleiß unterworfen ist.

In EP 0 608 805 A1 ist eine Kaffeemaschine mit einer Brüheinheit mit den Merkmalen des Oberbegriffs der beanspruchten Brüheinheit beschrieben. Bei der Brüheinheit dieser Kaffeemaschine erfolgt eine Abdichtung der Brühkammer in der Brühstellung der beiden Kolben gegenüber dem Brühzylinder, der bei der in diesem Dokument beschriebenen Kaffeemaschine nicht bewegt wird, durch einen auf einem Konus sitzenden Dichtring (O-Ring). Ein in axialer Richtung im Bereich der Außenseite des Kolbens von der Brühkammer wegweisend vorspringender Absatz wirkt zur Abdichtung gegen den Dichtring, der sodann auf der konischen Stellfläche des Widerlagers und entsprechend der konischen Verjüngung eine Durchmesservergrößerung erfährt und in seiner Endstellung unter Vorspannung zwischen der konischen Stellfläche, auf der der Dichtring bewegt wird, und der Innenwand des Brühzylinders anliegt. Gehalten wird der Dichtring in dieser Stellung durch besagten Absatz des Kolbens. In der Brühstellung von Kolben und Widerlager, in der die vorbeschriebene Abdichtungsanordnung gegeben ist, ist der Bewegungsbetrag zwischen der Rückseite des Kolbens und dem konischen Dichtringträger begrenzt. In der abgedichteten Stellung stoßen beide Elemente aneinander an. Hierdurch wird eine definierte Vorspannung auf den Dichtring ausgeübt.

Nachteilig bei dieser Brüheinheit ist, dass zum ausreichenden Abdichten bei Betreiben der Brüheinheit mit einem relativ hohen Druck, wie dieses für eine Espressobereitung der Fall ist, nicht nur das Material des O-Rings, sondern auch die von diesem erzeugte Vorspannung in der Abdichtungsanordnung den Anforderungen genügen muss. Dieses ist vor dem Hintergrund zu berücksichtigen, dass bei dieser Brüheinheit eine definierte Anschlagstellung die Brühstellung zwischen Kolben und Widerlager darstellt. Nachteilig ist ferner, dass der Dichtring auf der konischen Stellfläche beim Ein- und Ausfahrens des Widerlagers verschoben wird. Hierbei besteht die Gefahr, dass der Dichtring auf dem Stellkonus gerollt wird, insbesondere ungleichmäßig gerollt wird, was Undichtigkeiten zur Folge hat. Überdies ist bei der in diesem Dokument beschriebenen Abdichtungsanordnung der O-Ring einem erhöhten Verschleiß durch ständiges Aufweiten desselben unterworfen. Aus diesem Grunde ist auch ein Lösen dieses O-Ringes zum Aufheben der Abdichtungsanordnung nicht definiert.

Ausgehend von diesem diskutierten Stand der Technik liegt der Erfindung daher die Aufgabe zugrunde, eine Brüheinheit für eine Kaffeemaschine vorzuschlagen, mit der die zu dem nächstkommenden Stand der Technik aufgezeigten Nachteile zumindest weitestgehend vermieden sind.

Diese Aufgabe wird erfindungsgemäß durch eine Brüheinheit gelöst, bei der der nach innen vorspringende Absatz des Brühzylinders von der Rückseite des Kolbens wegweisend in Richtung zur Längsachse der Brühkammer geneigt ist.

Diese Brüheinheit verfügt über eine Dichtung oder eine Dichtungsanordnung, die aktivierbar ist. Die Dichtung oder die Dichtungsanordnung befindet sich in ihrem aktivierten Zustand, wenn die einzelnen Elemente der Brüheinheit sich in ihrer Brühstellung zueinander befinden, also in derjenigen Stellung, in der innerhalb der durch einen Abschnitt des Brühzylinders und die beiden Kolben gebildeten Brühkammer der größte Druck herrscht und die Abdichtfunktion der Dichtung oder der Dichtungsanordnung benötigt wird. Befinden sich die einzelnen Elemente der Brüheinheit nicht in der Brühstellung, sind die Anforderungen an die Abdichtung des Innenraums der Brühkammer bzw. des Brühzylinders geringer. In diesen Abschnitten des Brühzyklusses ist der Innenraum der Brühkammer drucklos. Daher ist die Dichtung oder die Dichtungsanordnung in diesen Abschnitten beim Durchlaufen eines Brühzyklusses nicht aktiviert. Die Dichtung oder die Dichtungsanordnung ist entweder dem Kolben und/oder dem Brühzylinder zugeordnet, wobei es zwecksmäßig ist, die Dichtung oder die Dichtungsanordnung jeweils nur einem der beiden Elemente zuzuordnen. Im nicht aktivierten Zustand der Dichtung oder der Dichtungsanordnung liegt diese je nach Konzeption nicht oder nur mit geringer oder auch ohne Vorspannung an dem relativ zu der Dichtung oder zu der Dichtungsanordnung bewegten Element an. In die Dichtungen oder die Dichtungsanordnung kann entweder von dem Kolben oder dem Brühzylinder getragen sein, wobei das die Dichtung oder die Dichtungsanordnungen nicht tragende Element, dann das jeweils relativ zu der Dichtung oder der Dichtungsanordnung bewegte Element ist. Bei einer Dichtungsanordnung besteht auch die Möglichkeit, dass eine solche, aus mehreren Elementen bestehende Anordnung teilweise vom Kolben und zum anderen Teil von dem Brühzylinder getragen ist.

Aktiviert wird die Dichtung oder Dichtungsanordnung durch eine axiale Relativbewegung zwischen dem Brühzylinder und dem Kolben oder einem Teil des Kolbens. Aktiviert wird die Dichtung oder Dichtungsanordnung erst, wenn sich die relativ zueinander bewegten Elemente der Brüheinheit in ihrer Brühstellung befinden bzw. in die Brühstellung eingefahren werden. Eine Aktivierung der Dichtung oder Dichtungsanordnung infolge einer axialen Relativbewegung zwischen dem Brühzylinder und dem Kolben oder einem Teil desselben bedingt, dass mit steigendem Innendruck innerhalb der Brühkammer die auf die Dichtung oder die Dichtungsanordnung ausgeübte Vorspannung ebenfalls steigt, da bei steigendem Innendruck der Kolben oder das Kolbenteil bestrebt ist, in axialer Richtung auszuweichen und gegen die Dichtung oder die Dichtungsanordnung wirkt, wodurch der Anpressdruck derselben an die Dichtfläche erhöht wird.

Als Dichtung zum Abdichten des Kolbens gegenüber der Innenwand der Brühkammer wird man in aller Regel einen Dichtring (O-Ring) einsetzen. Eine Dichtungsanordnung umfasst typischerweise mehrere Dichtringe. Infolge der Aktivierbarkeit können ohne Reibungserhöhung bei einer Relativbewegung zwischen dem Kolben und der Brühkammer auch mehrere, parallel zueinander wirkende Dichtringe eingesetzt werden. Eine Dichtungsanordnung kann auch aus zwei miteinander zusammenwirkenden Dichtringelementen bestehen, wobei dem einen Teil, beispielsweise dem Kolben ein Dichtring und dem anderen Teil, beispielsweise dem Brühzylinder ein mit dem Dichtring zusammenwirkendes weiteres Dichtelement zugeordnet ist.

Bei der beanspruchten Brüheinheit trägt der Kolben auf der Rückseite seines Kolbenbodens einen Dichtring, der sich zu seiner Aktivierung an einem nach innen vorspringenden umlaufenden flanschartigen Absatz am hinteren Ende des Brühzylinders abstützt. Eine Abdichtung der Brühkammer bei diesem Ausführungsbeispiel erfolgt somit nicht in radialer Richtung gegenüber der Innenwand des Brühzylinders, sondern in axialer Richtung gegenüber dem Absatz als Teil des Brühzylinders. Eine solche Ausgestaltung ist möglich, wenn der Brühzylinder als Antriebselement gegenüber dem Kolben bewegt wird und den Kolben infolge der vorbeschriebenen Abstützanordnung in seine Brühstellung bringt. Durch den von dem Absatz auf den Kolben ausgeübten Druck, wobei sich der Kolben mit seiner zu dem anderen Kolben weisenden Kolbenfläche an dem in der Brühkammer komprimierten Kaffeepulver während des Brühvorganges abstützt, wird die zur Aktivierung der Dichtung notwendige Vorspannung aufgebracht.

Da die Dichtung oder die Dichtungsanordnung in ihrem nicht aktivierten Zustand allenfalls mit geringer Vorspannung an der Innenwand des Brühzylinders anliegt, kann der Kolben gegenüber dem Brühzylinder mit relativ geringem Kraftaufwand bewegt werden, insbesondere ohne dass an dem Dichtring ein nennenswerter Verschleiß auftritt, auch wenn dieser an einer Kaffeeeinfüllöffnung des Brühzylinders im Zuge eines Brühzyklusses vorbeibewegt wird. Gleiches gilt für solche Kolben, die im Verlauf eines Brühzyklusses der Brüheinheit aus dem Brühzylinder herausgeführt werden, beispielsweise um den ausgelaugten Kaffee nach Durchführen eines Brühvorganges auszustoßen, und anschließend der Kolben wieder in den Brühzylinder eingefahren wird.

Nachfolgend ist die Erfindung anhand eines Ausführungsbeispiels unter Bezugnahme auf die beiliegenden Figuren beschrieben. Es zeigen:
- **Fig. 1:**: einen schematisierten Querschnitt durch eine Brüheinheit einer Kaffeemaschine in einer ersten Stellung seiner beweglichen Elemente innerhalb eines Brühzyklusses und
- **Fig. 2:**: die Brüheinheit der Figur 1 in der Brühstellung der gezeigten beweglichen Elemente.

Eine im Übrigen nicht näher dargestellte Kaffeemaschine verfügt über eine Brüheinheit 1. Die Brüheinheit 1 ist in den Figuren nur mit den für die Beschreibung der Erfindung wesentlichen Elementen dargestellt. Die Antriebsmimik, die Heißwasserzufuhr und der Kaffeeauslauf sind neben anderen Elementen nicht dargestellt.

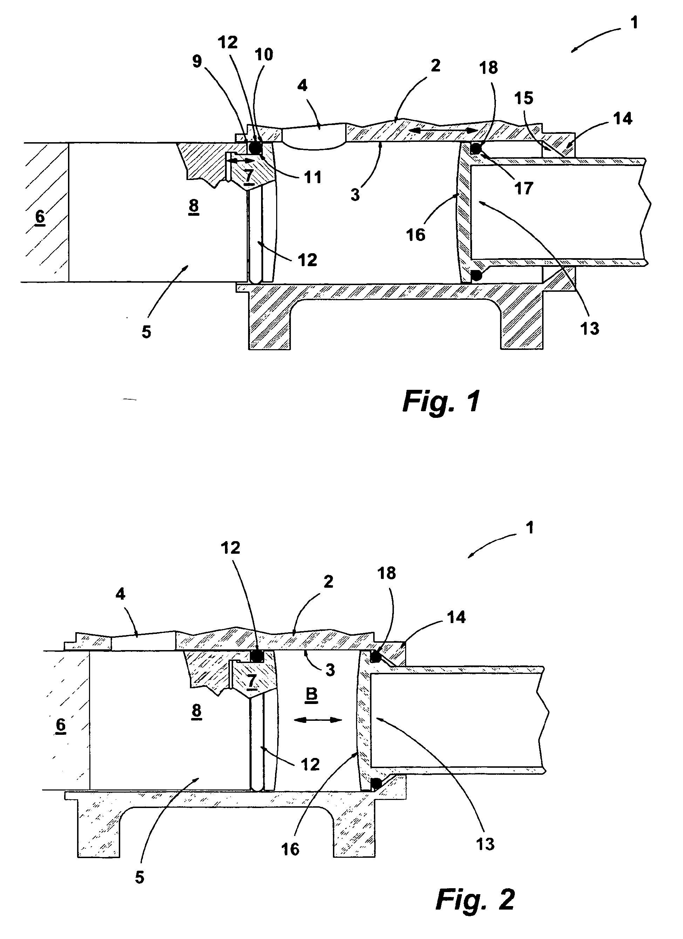

Die Brüheinheit 1 umfasst einen Brühzylinder 2 mit einer zylindrischen inneren Mantelfläche 3. Der Brühzylinder 2 ist in nicht näher dargestellter Art und Weise an Führungsstangen längsaxial bewegbar gelagert und mittels eines Spindeltriebes elektromotorisch angetrieben, wie dieses durch den dem Brühzylinder 2 zugeordneten Doppelpfeil in Figur 1 angedeutet ist. Der Brühzylinder 2 weist eine Einfüllöffnung 4 zum Zuführen von gemahlenem Kaffeepulver auf. Die Einfüllöffnung 4 befindet sich an der Oberseite des Brühzylinders 2, so dass gemahlenes Kaffeepulver schwerkraftbedingt in den Brühzylinder 2 hineinfallen kann.

Der Brüheinheit 1 ist ferner ein feststehender erster Kolben 5 zum Begrenzen einer Brühkammer B an ihrer in Figur 1 gezeigten linken Seite zugeordnet (vgl. Figur 2). Der feststehende Kolben 5 verfügt über eine nicht dargestellte Filterplatte als zur Brühkammer B weisenden Kolbenboden sowie über eine nicht näher dargestellte Kaffeeauslaufleitung. Der Kolben 5 ist an einem Widerlager 6 festgelegt, durch welches Widerlager 6 eine Axialbewegung des Kolbens 5 in Richtung zum Widerlager 6 blockiert ist. Der Kolben 5 des dargestellten Ausführungsbeispiels besteht aus einem Kolbenbodenteil 7 und einem Anschlusskolbenteil 8. Das Anschlusskolbenteil 8 ist der an dem Widerlager 6 festgelegte Teil des Kolbens 5. Gegenüber dem Anschlusskolbenteil 8 ist das Kolbenbodenteil 7 in axialer Richtung, wie durch den Doppelpfeil angedeutet, bewegbar. Die beiden Teile 7, 8 sind unverlierbar miteinander verbunden. Durch die Rückseite des Kolbenbodenteils 7 und die zur Brühkammer B weisende Seite des Anschlusskolbenteils 8 wird jeweils eine Ringnutbegrenzungsfläche 9, 10 gebildet. Die durch die Ringnutbegrenzungsflächen 9, 10 eingefasste umlaufende Nut wird in radialer Richtung zur Längsachse des Kolbens 5 hin durch einen Nutboden 11 des Kolbenbodenteils 7 begrenzt. In dieser Nut ist ein Dichtring 12 angeordnet. Der Dichtring 12 liegt mit seiner Innenseite auf dem Nutboden 11 auf. In seiner in Figur 1 gezeigten Stellung des Kolbens 5 liegt der Dichtring 12 quasi ohne Vorspannung an der Innenwand 3 des Brühzylinders 2 an. Dieses hat zum Vorteil, dass bei einem Herausbringen des Kolbens 5 aus dem Brühzylinder 2, was zum Ausstoßen des Kaffeekuchens bzw. Filterkuchens nach Beendigung eines Brühzyklusses notwendig ist, beim erneuten Einfahren des Kolbens 5 in den Brühzylinder 2 ein Verschleiß des Dichtringes 12 vermieden ist.

Der Brüheinheit 1 zugehörig ist ferner ein beweglicher zweiter Kolben 13. Durch den Kolben 13 wird das zum Brühen des Kaffees benötigte Heißwasser in der Brühstellung der Brüheinheit 1 in einer in den Figuren nicht näher dargestellten Art und Weise zugeführt. Des Weiteren dient der bewegliche Kolben 13 zur Komprimierung des durch die Einfüllöffnung 4 in den Brühzylinder 2 eingefüllten Kaffees. Der Kolben 13 ist nicht aktiv angetrieben. Zum Bewegen des Kolbens 13 dient ein nach innen vorspringender absatz- bzw. flanschartiger Ringabschnitt 14 des Brühzylinders 2. Die in das Innere des Brühzylinders 2 weisende Fläche 15 des Ringabschnittes 14 ist konisch verjüngt. Diese Fläche 15 bildet die Stellfläche zum Mitnehmen des Kolbens 13 bei einer Bewegung des Brühzylinders 2 in seine Brühstellung (Bewegung nach links in den Figuren 1 und 2).

Der bewegliche Kolben 13 trägt auf der Rückseite seines Kolbenbodens 16 einen auf einem Absatz 17 angeordneten Dichtring 18. Der Dichtring 18 liegt in seiner in Figur 1 gezeigten Stellung nicht an zylinderischen Teil der Innenwand 3 des Brühzylinders 2 und auch nicht an der Stellfläche 15 als Teil der Innenwand 3 des Brühzylinders 2 an. Der Brühzylinder 2 ist somit gegenüber dem Kolben 13 in axialer Richtung frei beweglich.

Nach Einfüllen von gemahlenem Kaffeepulver durch die Einfüllöffnung 4 in das Innere des Brühzylinders 2 wird die Brüheinheit 1 durch Verfahren des Brühzylinders 2 in ihre Brühstellung gebracht. Dabei fährt der Brühzylinder 2 in Richtung auf den Kolben 5 zu, so dass dieser das in den Brühzylinder 2 eingefüllte Kaffeepulver einschiebt, bis der Brühzylinder 2 in seine Endposition gefahren ist (vgl. Figur 2). Bei dieser Bewegung des Brühzylinders 2 wird der bewegliche Kolben 13 mitgenommen, da nach einem ersten Bewegungsabschnitt des Brühzylinders 2 die Stellfläche 15 zur Anlage an dem Dichtring 18 des Kolbens 13 gelangt. Dieses erfolgt, da der Durchmesser des Dichtringes 18 und des Kolbenbodens 16 größer ist als die lichte Weite der durch den Ringabschnitt 14 definierten rückwärtigen Öffnung des Brühzylinders 2.

Figur 2 zeigt die Brüheinheit 1 mit ihren beweglichen Elementen in der Brühstellung. Durch die beiden Kolben 5, 13 wird ein Abschnitt des Brühzylinders 2 gebildet, in dem das zuvor eingefüllte Kaffeepulver zusammengedrückt ist. Diese durch die beiden Kolben 5, 13 und in Abschnitt des Brühzylinders 2 gebildete Kammer bildet die Brühkammer B. Entsprechend dem auf den Kolben 13 ausgeübten Druck und dem zwischen den beiden Kolben 5, 13 befindlichen Kaffeepulver werden die jeweiligen Kolbendichtungen - die Dichtringe 12, 18 - unter Vorspannung gestellt und somit aktiviert, um gegenüber der Innenwand 3 bzw. 15 des Brühzylinders 2 die Brühkammer B abzudichten. Dieser auf die jeweiligen Kolben 5, 13 einwirkende axiale Druck ist durch den Doppelpfeil innerhalb der Brühkammer B in Figur 2 kenntlich gemacht. Bewegt werden zur Aktivierung der Dichtringe 12, 18 das Kolbenbodenteil 7 in axialer Richtung gegenüber dem Kolbenanschlussteil 8 zur Aktivierung des Dichtringes 12 des Kolbens 5 sowie der Kolbenboden 16 gegenüber der Stellfläche 15 zur Aktivierung der Abdichtungsfunktion des Dichtringes 18 des Kolbens 13. Im Zuge der Heißwasserzuführung zum Brühen des gewünschten Kaffeegetränks erhöht sich innerhalb der Brühkammer B der Innendruck, wodurch sich gleichfalls der auf die Dichtringe 12, 18 einwirkende Vorspannungsdruck erhöht. Somit dichten die Dichtringe 12, 18 bei steigendem Innendruck in der Brühkammer B den Anforderungen entsprechend stärker ab. Ist die Brühkammer B nach Brühen des Kaffees wieder drucklos, befinden sich die beiden Dichtringe 12, 18 wiederum in ihrem nicht aktivierten, in Figur 1 gezeigten Zustand, so dass anschließend der Brühzylinder 2 zum Ausstoßen des ausgelaugten Kaffeekuchens gegenüber den beiden Kolben 5, 13 quasi reibungslos verfahren werden kann. Der zwischen dem Kolbenboden 16 des Kolbens 13 in radialer Richtung verlaufende Ringspalt zur Innenwand 3 des Brühzylinders 2 ist nur mit einer geringen Spaltweite ausgebildet. Diese ist vorzugsweise kleiner als die Partikelgröße des in die Brühkammer B einzufüllenden Kaffeepulvers. Gleiches gilt auch für einen unter Umständen verbleibenden Spalt zwischen dem Dichtring 12 des Kolbens 5 und der Innenwand 3 des Brühzylinders 2.

Die Brüheinheit ist anhand einer Kaffeemaschine, die eine solche Brüheinheit aufweist, beschrieben worden. Die beschriebene aktivierbare Kolbenabdichtung kann mit denselben Vorteilen auch für Brüheinheiten anderer Getränkezubereitungsmaschinen eingesetzt werden, in denen relativ zueinander bewegt ein Brühzylinder und ein Kolben eingesetzt sind. In der in den Figuren beschriebenen Brüheinheit sind zwei unterschiedliche Ausführungsbeispiele der beanspruchten Kolbenabdichtung beschrieben. Es versteht sich, dass beide beschriebenen Ausführungsbeispiele auch unabhängig voneinander eingesetzt werden können. Dies ist der Fall bei Brüheinheiten, bei denen lediglich eine Abdichtung als aktivierbare Abdichtung ausgebildet ist.

### Bezugszeichenliste

- 1: Brüheinheit
- 2: Brühzylinder
- 3: Innenwand
- 4: Einfüllöffnung
- 5: feststehender Kolben
- 6: Widerlager
- 7: Kolbenbodenteil
- 8: Anschlusskolbenteil
- 9: Ringnutbegrenzungsfläche
- 10: Ringnutbegrenzungsfläche
- 11: Nutboden
- 12: Dichtring
- 13: beweglicher Kolben
- 14: Ringabschnitt
- 15: Fläche
- 16: Kolbenboden
- 17: Absatz
- 18: Dichtring
- B: Brühkammer

## Patentansprüche

1. Brüheinheit für eine Kaffeemaschine umfassend einen Brühzylinder (2) und einen Kolben (13), wobei der Brühzylinder (2) und der Kolben (13) in axialer Richtung relativ zueinander bewegbar sind, wobei zum Abdichten des Kolbens (13) gegenüber der Innenwand (3, 15) des Brühzylinders (2) eine aktivierbare Dichtung (18) oder Dichtungsanordnung vorgesehen ist, die durch eine axiale Bewegung des Kolbens (13) oder eines Teils (7) davon gegenüber dem Brühzylinder (2) aktivierbar ist und wenn aktiviert unter Vorspannung stehend zwischen Kolben (13) und Brühzylinderinnenwand (3, 15) abdichtet und welche Dichtung (18) oder Dichtungsanordnung, wenn nicht aktiviert, entweder nicht, mit nur geringer oder ohne Vorspannung an dem relativ zur Dichtung (18) oder zur Dichtungsanordnung bewegten Element (2) anliegt wobei in der Brühstellung von Kolben (13) und Brühzylinder (2) bei aktivierter Dichtung (18) oder Dichtungsanordnung der Kolben (13) sich mit der Rückseite seines Kolbenbodens (16) an einem nach innen vorspringenden umlaufenden Absatz (14) des Brühzylinders (2) unter Zwischenschaltung des Dichtringes (18) oder der Dichtungsanordnung zur Abdichtung der Brühkammer (B) abstützt, **dadurch gekennzeichnet, dass** der nach innen vorspringende Absatz (14) des Brühzylinders (2) von der Rückseite des Kolbens (13) wegweisend in Richtung zur Längsachse der Brühkammer (2) geneigt ist.

2. Brüheinheit nach Anspruch 1, **dadurch gekennzeichnet, dass** der Kolben (13) den Dichtring (18) oder die Dichtungsanordnung trägt.

3. Brüheinheit nach Anspruch 1 oder 2, **dadurch gekennzeichnet, dass** als Dichtring (18) ein O-Ring vorgesehen ist.

4. Brüheinheit nach einem der Ansprüche 1 bis 3, **dadurch gekennzeichnet, dass** der Brühzylinder (2) angetrieben ist und durch diesen der Kolben (13) bewegt wird.

5. Kaffeemaschine mit einer Brüheinheit, **dadurch gekennzeichnet, dass** die Brüheinheit (1) nach einem der Ansprüche 1 bis 4 ausgestaltet ist.

## Claims

1. A brewing unit for a coffee machine, comprising a brewing cylinder (2) and a piston (13), wherein the brewing cylinder (2) and the piston (13) are movable relative to each other in the axial direction, wherein in order to seal the piston (13) against the inner wall (3, 15) of the brewing cylinder (2), an activatable seal (18) or sealing arrangement is provided, which can be activated with respect to the brewing cylinder (2) by means of an axial movement of the piston (13) or a part (7) thereof and which when activated is pre-stressed to provide a seal between the piston (13) and the brewing cylinder inner wall (3, 15), and wherein the seal (18) or sealing arrangement, when not activated, either does not sit closely, or sits with only a slight or no pre-stress on the element (2) moving relative to, the seal (18) or the sealing arrangement, wherein in the brewing position of the piston (13) and the brewing cylinder (2) with the activated seal (18) or sealing arrangement, the back of the piston base (16) of the piston (13) bears on an inwardly protecting circumferential shoulder (14) of the brewing cylinder (2) via the intermediary of the sealing ring (18) or the sealing arrangement to seal the brewing chamber (B), **characterized in that** the inwardly projecting shoulder (14) of the brewing cylinder (2) is inclined away from the back of the piston (13) in the direction of the longitudinal axis of the brewing chamber (2).

2. A brewing unit according to claim 1, **characterized in that** the piston, (13) carries the sealing ring (18) or the sealing arrangement.

3. A brewing unit according to claim 1 or claim 2, **characterized in that** an O-ring is provided as the sealing ring (18).

4. A brewing unit according to one of claims 1 to 3, **characterized in that** the brewing cylinder (2) is driven, thereby moving the piston (13).

5. A coffee machine haying a brewing unit, **characterized in that** the brewing unit (1) is arranged in accordance with one of claims 1 to 4.

## Revendications

1. Système d'infusion pour une machine à café comprenant un cylindre d'infusion (2) et un piston (13), le cylindre d'infusion (2) et le piston (13) étant mobiles l'un par rapport à l'autre selon un mouvement relatif dans le sens axial, un joint d'étanchéité (18) activable ou dispositif d'étanchéité étant prévu pour étancher le piston (13) par rapport à la paroi interne (3, 15) du cylindre d'infusion (2), qui est activable par le mouvement axial du piston (13) ou par une partie (7) de ce dernier par rapport au cylindre d'infusion (2) et, lorsqu'il est activé assure l'étanchéité en étant maintenu sous précontrainte entre le piston (13) et la paroi interne du cylindre d'infusion (3, 15) et lequel joint d'étanchéité (18) ou dispositif d'étanchéité, s'il n'est pas activé, n'est soit pas du tout en contact soit maintenu à une très faible, voire aucune précontrainte contre l'élément (2) mobile de façon relative par rapport au joint d'étanchéité (18) ou au dispositif d'étanchéité, le piston (13) s'appuyant, en position d'infusion du piston (13) et du cylindre d'infusion (2) lorsque le joint d'étanchéité (18) ou dispositif d'étanchéité est actif, par la face arrière de son fond de piston (16) contre un décrochement (14) circonférentiel en saillie vers l'intérieur sur le cylindre d'infusion (2) par l'intermédiaire de la bague d'étanchéité (18) ou du dispositif d'étanchéité afin d'assurer l'étanchéité de la chambre d'infusion (B),
**caractérisé en ce que** le décrochement (14) en saillie vers l'intérieur du cylindre d'infusion (2) est incliné vers l'axe longitudinal de la chambre d'infusion (2) en s'éloignant de la face arrière du piston (13).

2. Système d'infusion selon la revendication 1 **caractérisé en ce que** le piston (13) supporte la bague d'étanchéité (18) ou le dispositif d'étanchéité.

3. Système d'infusion selon la revendication 1 ou 2 **caractérisé en ce qu'**un anneau torique est prévu en guise de bague d'étanchéité (18).

4. Système d'infusion selon l'une des revendications 1 à 3 **caractérisé en ce que** le cylindre d'infusion (2) est entraîné et que ce dernier met en mouvement le piston (13).

5. Machine à café avec un système d'infusion **caractérisée en ce que** unité d'infusion (1) est configurée selon l'une des revendications 1 à 4.
